# EUROPÄISCHE PATENTSCHRIFT

(11) **EP 3 093 220 B1**
(45) Veröffentlichungstag und Bekanntmachung des Hinweises auf die Patenterteilung: **06.06.2018**
(21) Anmeldenummer: 16168816.3
(22) Anmeldetag: 09.05.2016
(51) Int. Cl.: B62D 21/14, B62D 53/06, B62D 21/20, B62D 63/06

(54) **EXPANDIERBARER FAHRZEUGANHÄNGER**
EXPANDABLE VEHICLE TRAILER
REMORQUE DE VÉHICULE EXTENSIBLE

(30) Priorität: 12.05.2015 DE 202015102447 U
(43) Veröffentlichungstag der Anmeldung: 16.11.2016
(73) Patentinhaber: System Trailers Fahrzeugbau GmbH, 49767 Twist (DE)
(72) Erfinder: Saatkamp, Ralf, 49767 Twist (DE)
(74) Vertreter: Habbel, Ludwig

(56) Entgegenhaltungen:
- EP-A1- 0 825 097
- WO-A1-97/08040
- DE-U1- 9 306 626
- FR-A1- 2 715 627
- GB-A- 2 255 054

## Beschreibung

Die Erfindung betrifft einen expandierbaren Fahrzeuganhänger nach dem Oberbegriff des Anspruchs 1.

Aus der DE 93 06 626 U1, die als nächstkommender Stand der Technik angesehen wird, ist ein solcher Fahrzeuganhänger bekannt.

Aus der FR 2 715 627 A1 ist ein Fahrzeuganhänger bekannt, bei dem die vorderen und hinteren Längsträger übereinander angeordnet sind.

Aus der EP 0 825 097 A1, der WO 97/08040 A1 oder aus der GB 2 255 054 A sind ebenfalls expandierbare Fahrzeuganhänger bekannt.

Aus der EP 2 165 918 B1 ist ein gattungsfremder expandierbarer Fahrzeuganhänger bekannt, bei dem die vorderen Rollen nicht innerhalb eines U-Profils geführt sind, sondern vielmehr eine Vielzahl von vorderen Rollen vorgesehen ist, um den hinteren Abschnitt am oberen Abschnitt des Fahrzeuganhängers sowohl nach unten als auch nach oben hin zuverlässig zu führen.

Aus der EP 0 107 746 A1 ist ein Rollschemel zum Kuppeln von Aufliegeranhängern bekannt, bei dem vordere und hintere Längsträger übereinander angeordnet sind und ohne zwischengeschaltete Rollen aufeinander gleitend verstellbar sind.

Aus der DE 201 10 408 U1 ist ein Fahrgestell für Fahrzeuganhänger bekannt, bei dem Fahrgestellteile einander überlappen und an ihren Verbindungsstellen formschlüssig ineinandergreifend profiliert sind, ohne zwischengeschaltete Rollen.

Aus der DE 39 35 110 A1 ist ein Sattelauflieger für Container bekannt, bei dem vordere und hintere Längsträger übereinander angeordnet sind und während ihrer Relativbewegung aufeinander gleitend verstellbar sind. Die Verstellung erfolgt mittels eines Zahnrades, welches zwischen die übereinander angeordneten Längsträger geschaltet ist und je nach Drehrichtung den Längsrahmen des Fahrzeuganhängers verlängert oder verkürzt.

Aus der DE 32 07 582 A1 ist ein Sattelanhänger bekannt, bei dem ein zweiachsiges Fahrwerk in Längsrichtung des Anhängerfahrgestells an diesem verschiebbar ist.

Der Erfindung liegt die Aufgabe zugrunde, einen gattungsgemäßen Fahrzeuganhänger dahingehend zu verbessern, dass dieser möglichst wirtschaftlich herstellbar ist und ein hohes Maß an mechanischer Stabilität aufweist.

Diese Aufgabe wird durch einen Fahrzeuganhänger mit den Merkmalen des Anspruchs 1 gelöst.

Die Erfindung schlägt mit anderen Worten vor, dass eine hintere Rolle unterhalb eines vorderen Längsträgers angeordnet ist. Dies ermöglicht eine gute Zugänglichkeit und somit eine einfache Herstellung sowie Montage der Einzelteile bei der Herstellung des Fahrzeuganhängers.

Da die vorderen und hinteren Längsträger nicht übereinander angeordnet sind, sondern vielmehr seitlich versetzt zueinander, können die vorderen und hinteren Längsträger einander höhenmäßig überlappen, was vorschlagsgemäß auch vorgesehen ist. Auf diese Weise kann die Bauhöhe der Rahmenkonstruktion des Fahrzeuganhängers reduziert werden, so dass ein tieferer Schwerpunkt des Fahrzeuganhängers bewirkt werden kann bzw. dadurch, dass die Ladefläche niedriger angeordnet werden kann, ein größerer Nutzraum für die Ladung bereit gestellt werden kann. Alternativ dazu oder auch einhergehend mit der Absenkung der Ladefläche kann vorgesehen sein, die vorderen und / oder hinteren Längsträger mit einer größeren Höhe auszugestalten als dies von dem gattungsgemäßen Fahrzeuganhänger bekannt ist, so dass auf diese Weise eine besonders hohe mechanische Stabilität des Fahrzeuganhängers ermöglicht werden kann, ohne hierdurch die Höhe der Ladefläche nachteilige zu vergrößern. Durch den seitlichen Versatz und die höhenmäßige Überlappung der vorderen und der hinteren Längsträger können die Längsträger dementsprechend höher ausgestaltet werden, ohne die Höhe der Rahmenkonstruktion dabei im gleichen Maße zu vergrößern.

Eine besonders wirtschaftliche Ausgestaltung des vorschlagsgemäßen Fahrzeuganhängers wird dadurch ermöglicht, dass das U-Profil eine Führung der vorderen Rollen sowohl nach oben als auch nach unten hin ermöglicht, so dass auf die Verwendung einer Vielzahl von Rollen verzichtet werden kann, die im Vergleich zur Verwendung des vorschlagsgemäß vorgesehenen U-Profils teurer wären. Weiterhin ist vorschlagsgemäß vorgesehen, dass die vorderen Rollen an den hinteren Längsträgern gehalten sind. Im Vergleich zu dem gattungsgemäßen Fahrzeuganhänger, bei welchem die vorderen Rollen an Traversen des hinteren Abschnitts gehalten sind, ergibt sich so entweder ein wirtschaftlicher Vorteil, da eigens vorgesehen Traversen, die zur Halterung der vorderen Rollen dienen, entfallen können, oder es ergibt sich ein größeres Maß an konstruktiver Freiheit, da die Stelle, wo eine Traverse am hinteren Abschnitt vorgesehen sein soll, unabhängig davon gewählt werden kann, wo die vorderen Rollen vorgesehen sein sollen, da der Montageort für die vorderen Rollen stufenlos entlang der Länge der hinteren Längsträger gewählt werden kann.

Vorteilhaft können sowohl die vorderen als auch die hinteren Längsträger in an sich bekannter Weise als I-Profile ausgestaltet sein, also als so genannte Doppel-T-Träger. Dabei kann vorteilhaft vorgesehen sein, dass die Ober- und Untergurte der I-Profile jeweils symmetrisch an den mittleren, aufrechten Steg eines solchen I-Profils anschließen. Bei den vorderen Längsträgern beispielsweise kann das I-Profil wirtschaftlich vorteilhaft so dimensioniert werden, wie es für die mechanische Belastung des Fahrzeuganhängers ausreichend ist, und es muss dabei nicht berücksichtigt werden, dass der Längsträger eine Laufbahn für die vorderen Rollen bildet, denn die Laufbahn für die vorderen Rollen wird durch das vorschlagsgemäß vorgesehene U-Profil gebildet.

Bei den hinteren Abschnitten des Anhängers kann vorgesehen sein, dass der Längsträger selbst die Laufbahn für die hinteren Rollen bildet. Aufgrund des seitlichen Versatzes der vorderen und hinteren Längsträger kann daher vorgesehen sein, den Untergurt der hinteren Längsträger vergleichsweise breit auszugestalten, um die entsprechende Laufbahn für die hinteren Rollen zu schaffen. Dies kann trotz des vergleichsweise höheren Materialeinsatzes vorteilhaft sein im Vergleich zu einem asymmetrisch aufgebauten I-Profil, da die Herstellung eines symmetrischen I-Profils erheblich einfacher ist und die Gefahr, dass sich der Träger bei der Herstellung aufgrund der Asymmetrie verzieht, ausgeschlossen ist.

Da vorschlagsgemäß eine hintere Rolle unterhalb eines vorderen Längsträgers angeordnet ist, kann vorteilhaft die hintere Rolle zwischen zwei Laschen angeordnet sein, die jeweils unter dem vorderen Längsträger gehalten sind und die ihrerseits dazu dienen, die Achse der hinteren Rolle zu halten.

Diese beiden erwähnten Laschen können vorteilhaft unmittelbar an die Unterseite des vorderen Längsträgers geschweißt sein, so dass keine zusätzlichen Halter o. dgl. erforderlich sind.

Ein Ausführungsbeispiel eines vorschlagsgemäßen Fahrzeuganhängers wird anhand der rein schematischen Darstellung nachfolgend näher erläutert. Dabei zeigt
- Fig. 1: einen Querschnitt durch den Rahmenaufbau eines expandierbaren Fahrzeuganhängers,
- Fig. 2: in gegenüber Fig. 1 vergrößertem Maßstab einen Querschnitt durch den Fahrzeugrahmen im Bereich der vorderen Rollen, und
- Fig. 3: im gleichen Maßstab wie Fig. 2 einen Querschnitt durch den Rahmen im Bereich der hinteren Rollen.

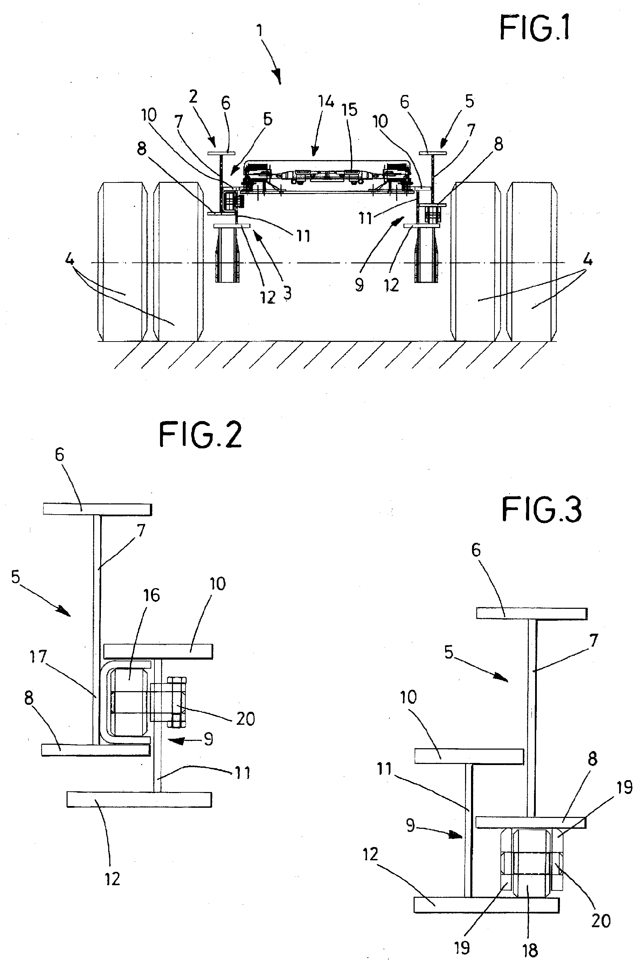

In Fig. 1 ist mit 1 insgesamt ein Fahrzeuganhänger bezeichnet, von dem nur einige Komponenten dargestellt sind. Der Fahrzeuganhänger 1 weist einen vorderen Abschnitt 2 und einen hinteren Abschnitt 3 auf, wobei der hintere Abschnitt 3 Laufräder 4 des Fahrzeuganhängers 1 trägt und teleskopierbar in den vorderen Abschnitt 2 des Fahrzeuganhängers 1 eingeschoben werden kann, so dass der Fahrzeuganhänger 1 insgesamt wahlweise eine kleinere oder eine größere Länge aufweisen kann. In beiden Stellungen sind die vorderen und hinteren Abschnitte 2 und 3 miteinander verriegelbar, so dass der Fahrzeuganhänger 1 seine jeweilige Länge zuverlässig beibehält.

Der vordere Abschnitt 2 weist vordere Längsträger 5 auf, die jeweils einen Obergurt 6, einen aufrechten Steg 7 und einen Untergurt 8 aufweisen.

In ähnlicher Weise weist der hintere Abschnitt 3 hintere Längsträger 9 auf, die jeweils einen Obergurt 10, einen aufrechten Steg 11 sowie einen Untergurt 12 aufweisen.

Weiterhin ist in Fig. 1 angedeutet, dass am hinteren Abschnitt 3 Kopplungselemente 14 vorgesehen sind, die eine Sattelplatte 15 umfassen und den Anschluss eines hinteren, als Auflieger ausgestalteten Anhängers ermöglichen.

Der Querschnitt durch den Fahrzeuganhänger 1 verläuft in Fig. 1 in zwei verschiedenen Ebenen: Die linke Seite der Fig. 1 zeigt einen Querschnitt durch die linke Hälfte des Fahrzeuganhängers 1 in einer Ebene, die weiter vorn verläuft als der Querschnitt auf der rechten Hälfte der Fig. 1.

Fig. 2 zeigt in vergleichsweise größerem Maßstab einen Querschnitt in derselben Ebene wie in der linken Hälfte der Fig. 1, nämlich nahe dem vorderen Ende des hinteren Abschnitts 3: Der hintere Längsträger 9 ist seitlich zum vorderen Längsträger 5 nach innen, zur Mittelachse des Fahrzeuganhängers 1 hin versetzt und mit dem vorderen Längsträger 5 höhenmäßig überlappend angeordnet. Zwischen dem Obergurt 10 des hinteren Längsträgers 9 und dem Untergurt 8 des vorderen Längsträgers 5 ist ein Freiraum vorgesehen, in welchem ein U-Profil 17 am vorderen Längsträger 5 befestigt ist. Das U-Profil 17 ist zur Seite hin offen und führt daher mit seinen beiden parallelen Schenkeln die vordere Rolle 16 sowohl nach oben als auch nach unten. Weitere Führungsrollen sind daher in diesem Bereich nicht erforderlich, so dass im Bereich des vorderen Endes des hinteren Abschnitts 3, oder noch weiter davor am vorderen Abschnitt 2, keine weiteren Führungsrollen erforderlich sind und vielmehr in diesem Bereich ein Paar von zwei vorderen Rollen 16 ausreichend ist, nämlich eine Rolle 16 im Bereich der rechten Längsträger 5 und 9, und eine zweite Rolle 16 im Bereich der linken Längsträger 5 und 9.

Fig. 3 zeigt in ähnlicher Weise den Bereich der hinteren Rolle 18, wobei eine solche hintere Rolle 18 zwischen zwei Laschen 19 gelagert ist, die unter den Untergurt 8 des vorderen Längsträgers 5 geschweißt sind. Eine Achse 20 der hinteren Rolle 18 ist in diesen beiden Laschen 19 gehalten.

Fig. 3 zeigt weiterhin, dass der Untergurt 12 des hinteren Längsträgers 9 die Laufbahn für die hintere Rolle 18 bildet. Zu diesem Zweck ist bei dem dargestellten Ausführungsbeispiel der Untergurt 12 asymmetrisch ausgestaltet und erstreckt sich vom aufrechten Steg 11 aus weiter nach außen als nach innen, zur Fahrzeugmitte hin. Abweichend von dem dargestellten Ausführungsbeispiel kann jedoch vorgesehen sein, auch den Untergurt 12, ebenso wie den Obergurt 10 des hinteren Längsträgers 9 und ebenso wie Ober- und Untergurte 6 und 8 der vorderen Längsträger 5 symmetrisch auszugestalten, wenn dies beispielsweise bei der Herstellung der hinteren Längsträger 9 vorteilhaft ist, so dass in diesem Fall der Untergurt 12 sich zur in Fig. 3 linken Seite, also zur Fahrzeugmitte hin, genauso weit erstrecken würde die auf der rechten, zur Fahrzeugaußenseite gerichteten Seite, wo der Untergurt 12 die Laufbahn für die Rolle 18 bildet.

## Patentansprüche

1. Expandierbarer Fahrzeuganhänger (1),
mit einem an ein Zugfahrzeug ankoppelbaren und vordere Längsträger (5) aufweisenden vorderen Abschnitt (2), und einem Laufräder (4) und hintere Längsträger (9) aufweisenden und Kopplungselemente (14) für den Anschluss eines weiteren Anhängers aufweisen hinteren Abschnitt (3), wobei die beiden Abschnitte (2, 3) gegeneinander verschiebbar und mittels Rollen (16, 18) verschiebebeweglich geführt sind,
und die sowohl in einer ersten, zusammengeschobenen Anordnung als auch in einer zweiten, auseinandergezogenen Anordnung jeweils arretierbar sind,
und wobei vordere Rollen (16) nahe dem vorderen Ende des hinteren Abschnitts (3) angeordnet sind,
und jeweils in einem liegend ausgerichteten, zur Seite offenen U-Profil (17) geführt sind,
und hintere Rollen (18) nahe dem hinteren Ende des vorderen Abschnitts (2) angeordnet sind,
und wobei die hinteren Längsträger (9) zu den vorderen Längsträgern (5) seitlich versetzt und in der Höhe einander überlappend angeordnet sind,
und dass die vorderen Rollen (16) an den hinteren Längsträgern (9) gehalten sind,
**dadurch gekennzeichnet,**
**dass** eine hintere Rolle (18) unterhalb eines vorderen Längsträgers (5) angeordnet ist.

2. Fahrzeuganhänger nach Anspruch 1,
**dadurch gekennzeichnet,**
**dass** sowohl die vorderen Längsträger (5) als auch die hinteren Längsträger (9) als I-Profile ausgestaltet sind, die jeweils einen aufrecht ausgerichteten Steg (7, 11), einen Obergurt (6, 10) und einen Untergurt (8, 12) aufweisen, wobei die Obergurte (6, 10) und die Untergurte (8, 12) jeweils symmetrisch an den Steg (7, 11) anschließen.

3. Fahrzeuganhänger nach Anspruch 1 oder 2,
**dadurch gekennzeichnet,**
**dass** die hintere Rolle (18) zwischen zwei Laschen (19) angeordnet ist, die jeweils unter dem vorderen Längsträger (5) gehalten sind,
wobei die Achse (20) der hinteren Rolle (18) an diesen beiden Laschen (19) gehalten ist.

4. Fahrzeuganhänger nach einem der vorhergehenden Ansprüche,
**dadurch gekennzeichnet,**
**dass** die zwei Laschen (19) an die Unterseite des vorderen Längsträgers (5) geschweißt sind.

## Claims

1. Extendable vehicle trailer (1), with a front section (2) having a front longitudinal support beam (5) which can be coupled to a vehicle, and a rear section (3) having running wheels (4) and rear longitudinal support beams (9) with coupling elements (14) for the connection of a further trailer, where the two sections (2, 3) can be pushed against one another and are guided on rollers (16, 18) to permit this shortening movement and can be locked both in a first "pushed together" arrangement as well as in a second extended arrangement, and where front rollers (16) are arranged near the front end of the rear section (3) each of which is guided in a horizontally aligned U-shaped profile (17) which is open at the side, and rear rollers (18) are arranged near the rear end of the front section (2), and where the rear longitudinal support beams (9) are laterally offset in relation to the front longitudinal support beams (5) and are arranged to overlap one another in height, and where the front rollers (16) are held on the rear longitudinal support beams (9), **characterised in that** a rear roller (18) is arranged beneath a front longitudinal support beam (5).

2. Vehicle trailer in accordance with claim 1, **characterised in that** both the front longitudinal support beam (5) and the rear longitudinal support beam (9) are formed as I-shaped profiles, each of which has a vertically aligned web (7, 11), an upper flange (6, 10) and a lower flange (8, 12), where the upper flanges (6, 10) and the lower flanges (8, 12) are both joined symmetrically to the web (7, 11).

3. Vehicle trailer in accordance with claim 1 or claim 2, **characterised in that** the rear roller (18) is located between two plates (19) each of which is mounted under the front longitudinal support beam (5), where the axle (20) of the rear roller (18) is mounted on these two plates (19).

4. Vehicle trailer in accordance with any of the preceding claims, **characterised in that** the two plates (19) are welded to the underside of the front longitudinal support beam (5).

## Revendications

1. Remorque de véhicule extensible (1) comprenant un segment avant (2) qu'il est possible d'atteler à un véhicule tracteur et qui présente des poutrelles longitudinales avant (5), et un segment arrière (3) présentant des roues (4) et des poutrelles (9) longitudinales arrière et des éléments d'attelage (14) pour atteler une remorque supplémentaire, sachant que les deux segments (2, 3) peuvent se déplacer l'un par rapport à l'autre et qu'ils sont guidés dans le sens du déplacement par des galets (16, 18), et qu'ils peuvent être immobilisés aussi bien dans une première configuration rentrée que dans une seconde configuration sortie, et sachant que des galets avant (16) sont disposés près de l'extrémité avant du segment arrière (3) et qu'ils sont guidés respectivement dans un profilé en U (17) horizontal ouvert sur le côté, et que des galets arrière (18) sont disposés près de l'extrémité arrière du segment avant (2), et sachant que les poutrelles longitudinales arrière (9) sont décalées latéralement par rapport aux poutrelles longitudinales avant (5) et disposées en hauteur de façon à se chevaucher mutuellement, et que les galets avant (16) sont retenus contre les poutrelles longitudinales arrière (9), **caractérisée en ce qu'**un galet arrière (18) est disposé en dessous d'une poutrelle longitudinale avant (5).

2. Remorque de véhicule selon la revendication 1, **caractérisée en ce qu'**aussi bien les poutrelles longitudinales avant (5) que les poutrelles longitudinales arrière (9) sont configurées sous forme de profilés en I qui présentent respectivement une nervure verticale (7, 11), une aile supérieure (6, 10) et une aile inférieure (8, 12), sachant que les ailes supérieures (6, 10) et les ailes inférieures (8, 12) se raccordent chacune symétriquement à la nervure (7, 11).

3. Remorque de véhicule selon la revendication 1 ou 2, **caractérisée en ce que** le galet arrière (18) est disposé entre deux pattes (19) respectivement retenues sous la poutrelle longitudinale avant (5), sachant que l'axe (20) du galet arrière (18) est retenu contre ces deux pattes (19).

4. Remorque selon l'une des revendications précédentes, **caractérisée en ce que** les deux pattes (19) sont soudées contre le dessous de la poutrelle longitudinale avant (5).
